# EUROPÄISCHE PATENTSCHRIFT

(11) **EP 3 112 196 B1**
(45) Veröffentlichungstag und Bekanntmachung des Hinweises auf die Patenterteilung: **31.10.2018**
(21) Anmeldenummer: 16176874.2
(22) Anmeldetag: 29.06.2016
(51) Int. Cl.: B60J 7/12, B60J 7/20

(54) **VERDECK MIT ABLAGERAUMDECKEL**
SOFT TOP WITH STORAGE SPACE LID
CAPOTE COMPRENANT UN COUVERCLE DE RANGEMENT

(30) Priorität: 02.07.2015 DE 102015110692
(43) Veröffentlichungstag der Anmeldung: 04.01.2017
(60) Teilanmeldung: 17168116.6
(73) Patentinhaber: Webasto-Edscha Cabrio GmbH, 82131 Stockdorf (DE)
(72) Erfinder: KOPP, Georg, 82131 Stockdorf (DE); HABERL, Franz, 82131 Stockdorf (DE)
(74) Vertreter: advotec.

(56) Entgegenhaltungen:
- EP-A2- 1 826 049
- DE-A1- 10 020 663
- DE-A1-102005 033 537
- DE-A1-102008 023 514
- DE-C1- 10 157 818
- US-A1- 2004 056 508
- US-B1- 6 682 149

## Beschreibung

Die Erfindung betrifft ein Verdeck eines Cabriolet-Fahrzeugs mit den Merkmalen des Oberbegriffs des Patentanspruchs 1.

Ein derartiges Verdeck ist aus der Praxis bekannt und kann als Faltverdeck mit einem faltbaren Verdeckbezug oder auch als Klappverdeck bzw. RHT (retractable hard top) mit starren Verdeckschalen ausgebildet sein. Das Verdeck umfasst ein Verdeckgestänge, mittels dessen je nach Ausführung der Verdeckbezug aufgespannt werden kann oder die starren Verdeckschalen verstellt werden können. Das Verdeckgestänge ist zwischen einer einen Fahrzeuginnenraum des betreffenden Fahrzeugs überspannenden Schließstellung und einer Ablagestellung verstellbar, in der der Fahrzeuginnenraum nach oben freigegeben ist und das Verdeckgestänge in einem heckseitigen Verdeckablageraum des betreffenden Fahrzeugs abgelegt ist. In der Regel ist der Verdeckablageraum mittels eines verstellbaren Ablageraumdeckels verschließbar, der in der Schließstellung des Verdecks eine im Fahrzeuginnenraum angeordnete Hutablage bilden kann und der bezogen auf eine vertikale Verdecklängsmittelebene beidseits jeweils über eine Lenkeranordnung an einem fahrzeugfesten Hauptlager schwenkbar gelagert ist. Das Verdeckgestänge weist bezogen auf die vertikale Verdecklängsmittelebene beidseits jeweils eine Gestängeanordnung auf, die ebenfalls an dem jeweiligen fahrzeugfesten Hauptlager schwenkbar gelagert ist und mittels eines an dem Hauptlager angeordneten Hauptantriebs antreibbar ist. Zum Verstellen des Ablageraumdeckels wird bisher ein separater Antriebsmotor vorgehalten, was einerseits Kosten verursacht und andererseits bauraumintensiv ist.

Aus der Druckschrift DE 10 2008 023 514 A1 ist ein Verdeck eines Cabriolet-Fahrzeugs bekannt, umfassend ein Verdeck mit einem vorderen Dachteil und einem hinteren als Ablageraumdeckel nutzbaren Dachteil sowie einer Heckscheibe. An einem nicht näher spezifizierten Hauptlager sind zwei Hauptlenker angelenkt, die mit dem vorderen Dachteil verbunden sind. Über einen Kurbelarm, eine Koppelstange und einen Schwanenhalslenker erfolgt eine synchronisierte Bewegung des vorderen Dachteils und des hinteren Dachteils. Die Heckscheibe weist eine gelenkartige Verbindung zum vorderen Dachteil auf. Zudem ist die Heckscheibe gelenkig mit einem der zwei Lenker der Bewegungsmechanik des vorderen Dachteils verbunden. Auch eine feste Verbindung zwischen Heckscheibe und einem der Lenker ist angesprochen.

Aus der Druckschrift DE 100 20 663 A1 ist ein Verdeck eines Cabriolet-Fahrzeugs bekannt, das als RHT ausgebildet ist und ein Verdeckgestänge umfasst, das bezogen auf eine vertikale Verdecklängsmittelebene beidseits jeweils eine Gestängeanordnung aufweist, die zwei Hauptlenker umfasst. Des Weiteren umfasst das Verdeck einen Ablageraumdeckel, der auch ein Dachsegment des Verdecks bildet und der bezogen auf die vertikale Verdecklängsmittelebene beidseits jeweils über eine Lenkeranordnung an einem jeweiligen fahrzeugfesten Hauptlager gelagert ist. Ein Hauptantrieb treibt über ein Getriebe eine Antriebsscheibe an, die einerseits über einen ersten Antriebslenker die jeweilige Gestängeanordnung mit den Hauptlenkern antreibt und andererseits über einen zweiten Antriebslenker die betreffende Lenkeranordnung des Ablageraumdeckels antreibt.

Der Erfindung liegt die Aufgabe zugrunde, ein Verdeck der einleitend genannten Gattung zu schaffen, bei dem diese Nachteile beseitigt sind.

Diese Aufgabe ist erfindungsgemäß durch das Verdeck mit den Merkmalen des Patentanspruchs 1 gelöst.

Bei dem Verdeck nach der Erfindung sind also sowohl die beidseits angeordneten Lenkeranordnungen des Ablageraumdeckels als auch die Gestängeanordnungen des Verdeckgestänges von den gleichen Antriebseinrichtungen, nämlich von den an den jeweiligen Hauptlagern angeordneten Hauptantrieben angetrieben. Damit ist das Verdeck nach der Erfindung gegenüber bisherigen Lösungen kostengünstiger herstellbar. Auch ist kein zusätzlicher Bauraum für einen Antrieb des Ablageraumdeckels erforderlich. Vielmehr erfolgt lediglich eine Kopplung zwischen dem Hauptantrieb und der jeweiligen Lenkeranordnung des Ablageraumdeckels.

Bei dem Verdeck nach der Erfindung treibt der Hauptantrieb eine an dem jeweiligen Hauptlager drehbar gelagerte Antriebsscheibe an, die über eine erste Antriebslenkeranordnung mit der betreffenden Lenkeranordnung des Ablageraumdeckels verbunden ist und über eine zweite Antriebslenkeranordnung mit der Gestängeanordnung des Verdeckgestänges verbunden ist. Die Antriebslenkeranordnungen stellen also jeweils eine Koppeleinrichtung zwischen der Antriebsscheibe und dem jeweils anzutreibenden Bauelement des Verdecks dar.

Um dem Hauptantrieb eine weitere Funktionalität zuzuordnen und keine weiteren zusätzlichen Antriebe bereitstellen zu müssen, ist die Antriebsscheibe über eine dritte Antriebslenkeranordnung mit einem Heckscheibenlenker zum Verstellen einer Heckscheibe verbunden, der schwenkbar an dem Hauptlager gelagert ist. An der Antriebsscheibe sind damit drei Antriebslenkeranordnungen angelenkt, so dass der Hauptantrieb bzw. die beidseits angeordneten Hauptantriebe zum Verstellen dreier Baueinheiten des Verdecks genutzt werden kann bzw. können.

Unter einer Antriebsscheibe ist vorliegend nicht nur eine geschlossene Scheibe im eigentlichen Sinne zu verstehen. Vielmehr umfasst der Begriff Antriebsscheibe auch eine starre Antriebshebelkonstruktion, die drehbar an dem jeweiligen Hauptlager gelagert ist und an der die Anlenkpunkte für die Antriebslenkeranordnungen ausgebildet sind.

Bei einem kostengünstig herstellbaren Verdeck ist der Hauptantrieb vorzugsweise als Elektromotor ausgebildet. Insbesondere in diesem Fall kann die Antriebsscheibe ein Zahnrad oder ein Zahnradsegment sein, das von einem Antriebsritzel des Hauptantriebs angetrieben ist.

Um eine definierte Bewegungsbahn des Ablageraumdeckels bei dessen Verstellen zu erhalten, ist die Lenkeranordnung des Ablageraumdeckels zweckmäßigerweise eine Mehrgelenkanordnung, insbesondere eine Viergelenkanordnung, die mit einer Basiskonstruktion des Ablageraumdeckels verbunden ist. Zwei Lenker der Viergelenkanordnung sind dann also an der Basiskonstruktion des Ablageraumdeckels angebunden und mit ihren der Basiskonstruktion abgewandten Enden an dem Hauptlager angelenkt.

Bei speziellen Anwendungen, bei denen ein Verdeckteil, beispielsweise der Verdeckbezug oder eine Heckscheibe, in der Schließstellung des Verdecks durch einen Spalt zwischen dem Ablageraumdeckel und einem weiteren Fahrzeugelement, beispielsweise einem Kofferraumdeckel, in den Verdeckablageraum eintaucht, kann es erforderlich sein, dass der Ablageraumdeckel eine absenkbare Deckplatte aufweist, die schwenkbar an der Basiskonstruktion gelagert ist. Die Deckplatte nimmt dann in der Schließstellung des Verdecks eine Absenkposition ein, in der der Spalt gebildet ist, wohingegen sie in der Ablagestellung des Verdecks eine Normalstellung einnimmt, in der der Spalt geschlossen ist.

Bei einer weiteren speziellen Ausführungsform des Verdecks nach der Erfindung ist der Ablageraum bezogen auf die vertikale Verdecklängsmittelebene beidseits jeweils mit einer Gestängeaustrittsklappe versehen, die in der Schließstellung des Verdeckgestänges nach unten in eine Durchlassstellung weggeklappt ist und in der Ablagestellung des Verdeckgestänges in eine den Ablageraum überdeckende Abdeckstellung verschwenkbar ist, so dass die Gestängeaustrittsklappen mit einem Mittelteil des Ablageraumdeckels fluchten. Die Gestängeaustrittsklappen stellen seitliche, flügelartige Elemente des Ablageraumdeckels dar, die ermöglichen, dass das Verdeckgestänge in der Schließstellung des Verdecks aus dem Verdeckablageraum austreten kann.

Zum Verstellen der Gestängeaustrittsklappen gegenüber einem zentralen Ablageraumdeckelelement kann an der Unterseite des Ablageraumdeckels ein Antriebsmotor angeordnet sein.

Der Antriebsmotor ist vorzugsweise jeweils über eine Schubstange mit den Gestängeaustrittsklappen gekoppelt.

Um keinen weiteren Antrieb zum Absenken der Deckplatte in die Absenkstellung zu benötigen, kann der Antriebsmotor bei einer Betätigung über eine Hebelanordnung die Deckplatte des Ablageraumdeckels gegenüber dessen Basiskonstruktion um eine sich in Verdeckquerrichtung erstreckende Schwenkachse verstellen. Der Antriebsmotor betätigt also gleichzeitig die Gestängeaustrittsklappen und die Deckplatte, so dass sich diese drei Bauelemente gegenüber der Basiskonstruktion verschwenken.

Unter einer Basiskonstruktion ist im Sinne der Erfindung eine Unterkonstruktion des Ablageraumdeckels zu verstehen, an der die Deckplatte und gegebenenfalls auch die Gestängeaustrittsklappen gelagert werden können. Die Basiskonstruktion kann eine Platte im eigentlichen Sinne sein, aber auch eine Gitterkonstruktion oder dergleichen, die Lagerpunkte für die anderen Bauelemente des Ablageraumdeckels, wie die Gestängeaustrittsklappen und die Deckplatte, und für die Lenkeranordnung zur Anbindung des Ablageraumdeckels an die Hauptlager aufweist.

Weitere Vorteile und vorteilhafte Ausgestaltungen des Gegenstandes der Erfindung sind der Beschreibung, der Zeichnung und den Patentansprüche entnehmbar.

Ein Ausführungsbeispiel eines Verdecks nach der Erfindung ist in der Zeichnung schematisch vereinfacht dargestellt und wird in der nachfolgenden Beschreibung näher erläutert. Es zeigt:
- Figur 1: eine perspektivische Teilansicht eines Faltverdecks nach der Erfindung in dessen Schließstellung;
- Figur 2: eine perspektivische Darstellung des Faltverdecks nach Figur 1 in seiner Ablagestellung;
- Figur 3: eine Seitenansicht des Faltverdecks in dessen Schließstellung;

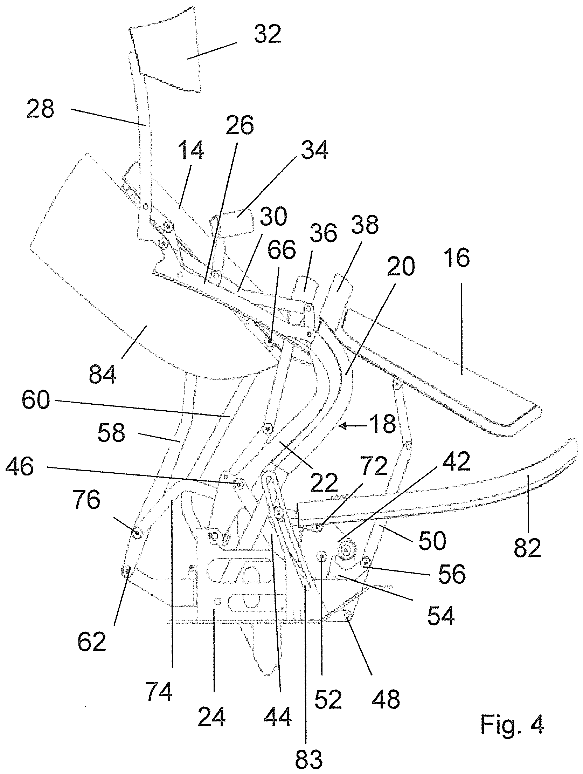

- Figur 4: eine Seitenansicht des Faltverdecks nach Figur 1 in einer ersten Zwischenstellung beim Verstellen;

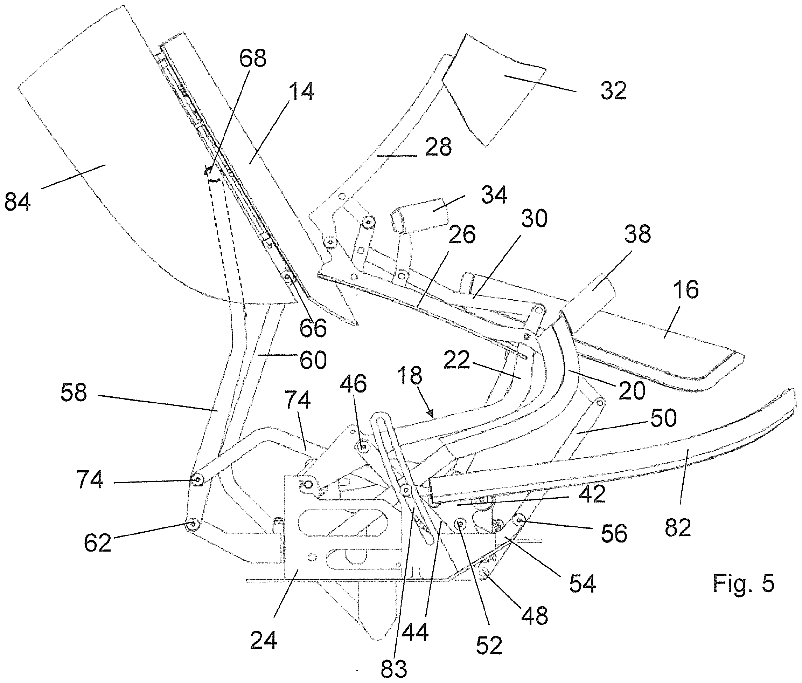

- Figur 5: eine Seitenansicht des Faltverdecks nach Figur 1 in einer zweiten Zwischenstellung beim Verstellen;

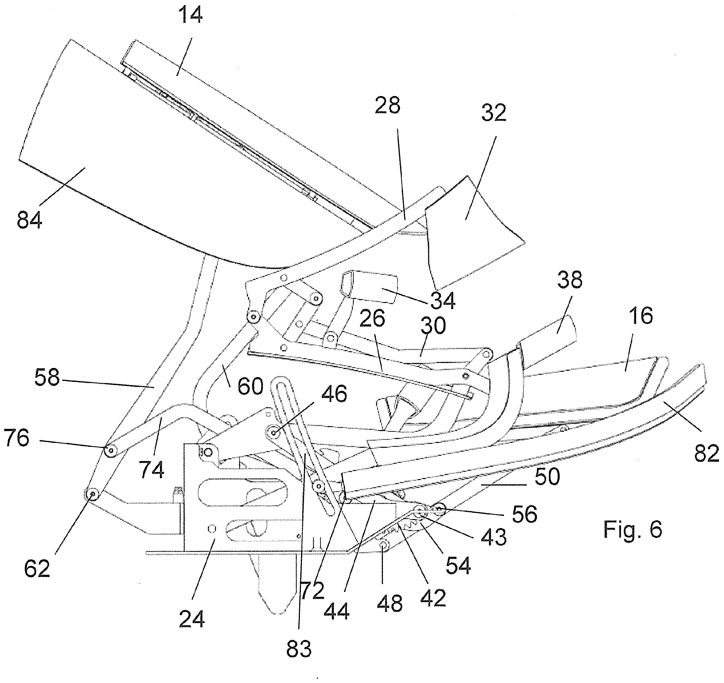

- Figur 6: eine Seitenansicht des Faltverdecks nach Figur 1 in einer dritten Zwischenstellung beim Verstellen;
- Figur 7: eine Seitenansicht des Faltverdecks nach Figur 1 in einer Ablagestellung;
- Figur 8: eine perspektivische Innenansicht des Faltverdecks nach Figur 1 in dessen Schließstellung; und

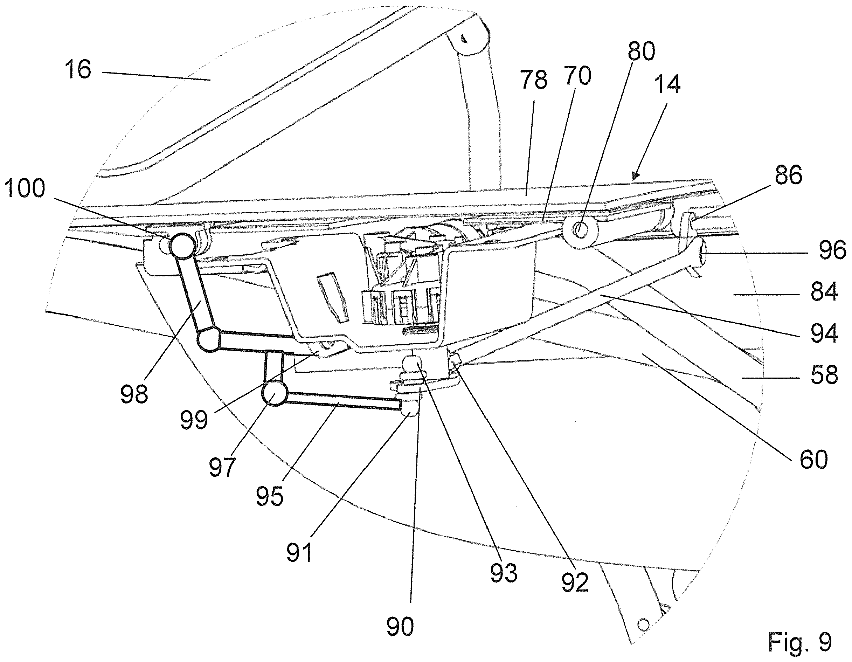

- Figur 9: eine perspektivische Unteransicht eines Ablageraumdeckels des Faltverdecks.

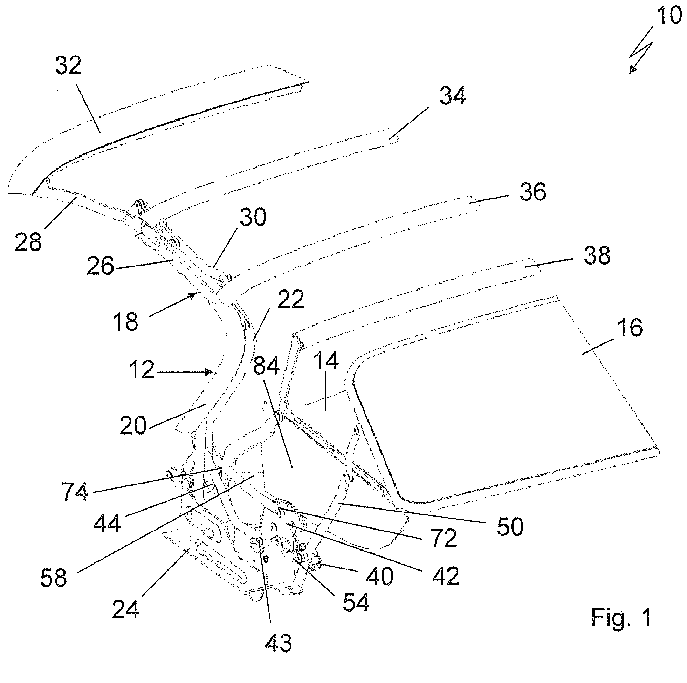

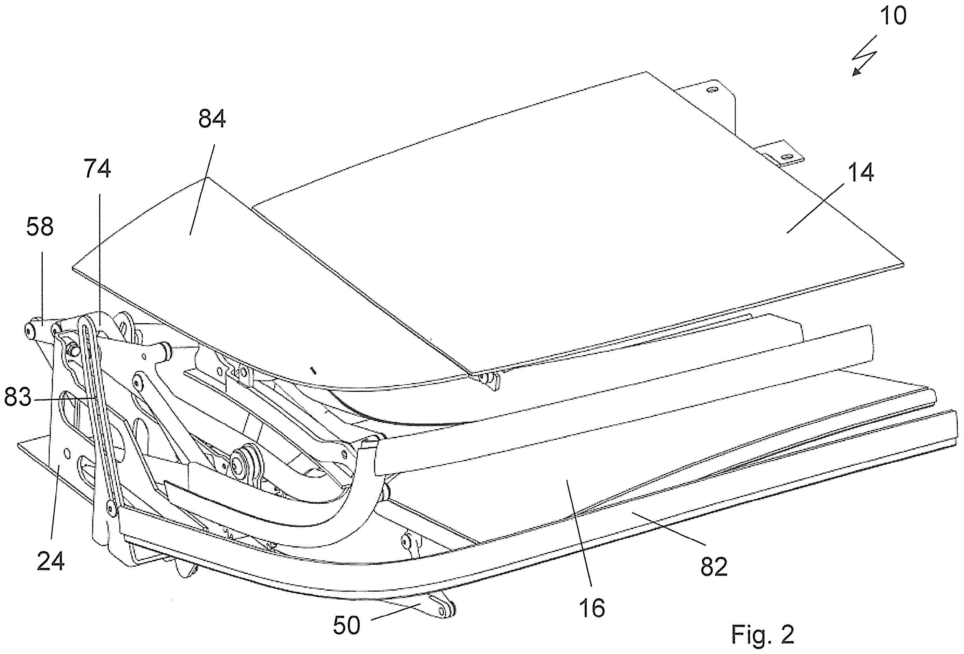

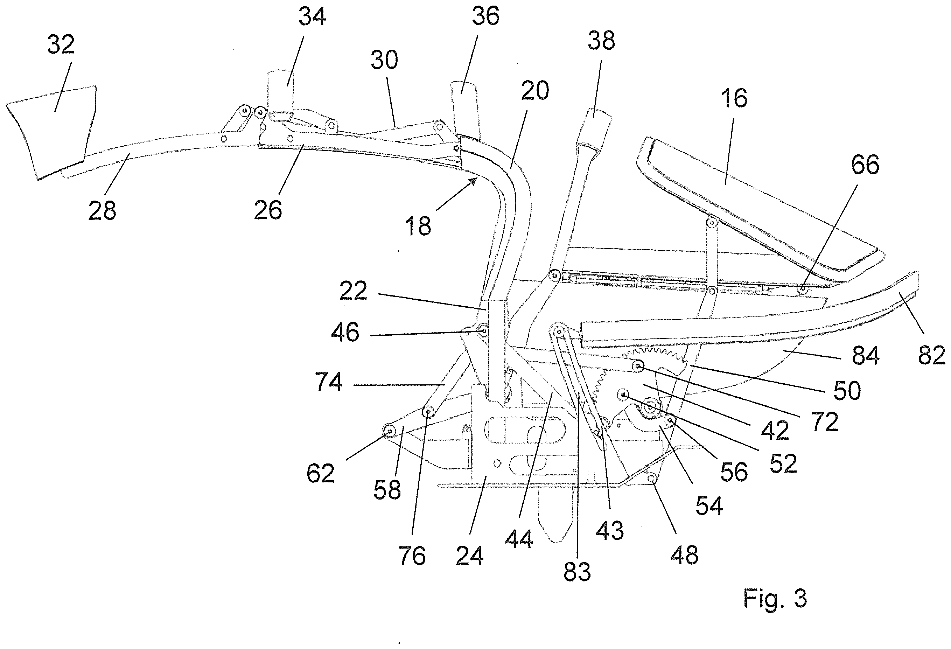

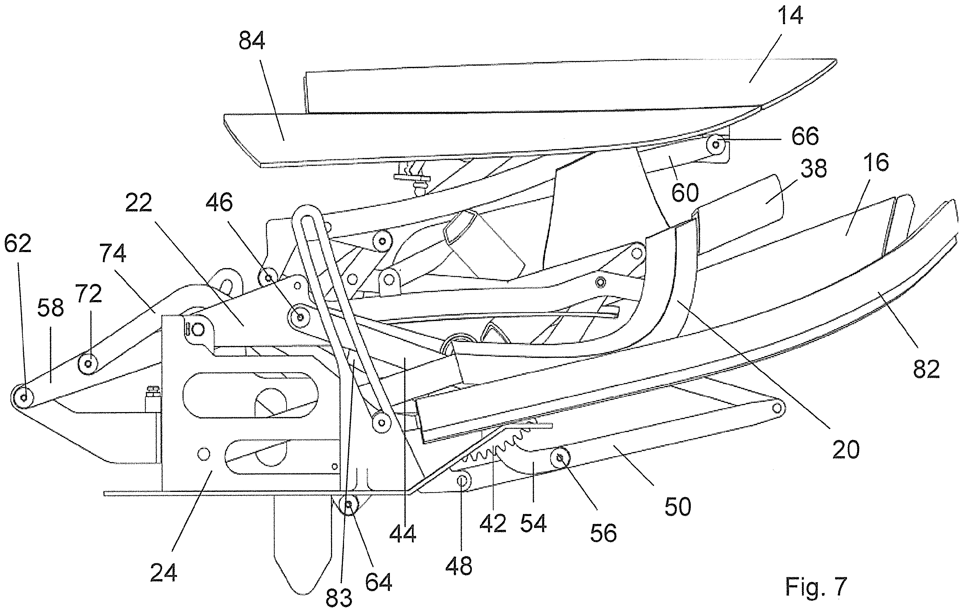

In der Zeichnung ist ein Cabriolet-Verdeck 10 dargestellt, das als Faltverdeck ausgebildet ist und ein Verdeckgestänge 12 aufweist, mittels dessen ein hier nicht näher dargestellter Verdeckbezug aufspannbar ist. Das Verdeckgestänge 12 ist zwischen einer in den Figuren 1 und 3 dargestellten Schließstellung, in der ein Fahrzeuginnenraum eines hier nicht näher dargestellten Cabriolet-Fahrzeugs überspannt ist, und einer in den Figuren 2 und 7 dargestellten Ablagestellung verstellbar, in der das Verdeck in einem heckseitigen Verdeckablageraum des betreffenden Fahrzeugs aufgenommen ist. Der Verdeckablageraum ist mittels eines Ablageraumdeckels 14 verschließbar, der in der Schließstellung des Verdecks eine vom Fahrzeuginnenraum aus erreichbare, heckseitige Hutablage bildet, die unterhalb einer Heckscheibe 16 angeordnet ist.

Der Übersichtlichkeit halber ist das Verdeck 10 in der Zeichnung nur anhand des bezogen auf die Vorwärtsfahrtrichtung des betreffenden Fahrzeugs links angeordneten Verdeckbereiche dargestellt. Die bezogen auf die Vorwärtsfahrtrichtung rechts angeordneten Verdeckbereiche sind bezogen auf eine vertikale Verdecklängsmittelebene spiegelsymmetrisch hierzu ausgebildet und ergeben sich aus der nachfolgenden Beschreibung daher ebenfalls zwanglos.

Das Verdeckgestänge umfasst bezogen auf die vertikale Verdecklängsmittelebene beidseits jeweils eine im Wesentlichen in Fahrzeuglängsrichtung ausgerichtete Gestängeanordnung 18, die eine Hauptsäule 20 und einen Hauptlenker 22 aufweist, welche beide schwenkbar an einem jeweiligen fahrzeugfesten, hier einteiligen Hauptlager 24 gelagert sind. Die Gestängeanordnungen 18 umfassen des Weiteren jeweils ein mittleres Dachrahmenelement 26 und ein vorderes Dachrahmenelement 28. Das mittlere Dachrahmenelement 26 bildet zusammen mit der Hauptsäule 20, dem Hauptlenker 22 und dem Hauptlager 24 ein Hauptviergelenk. Das vordere Dachrahmenelement 28 ist mittels einer Koppellenkeranordnung 30 gegenüber dem mittleren Dachrahmenelement 26 verstellbar. Die Verstellbewegung wird durch ein Verschwenken der Hauptsäule 20 und des Hauptlenkers 22 ausgelöst.

Zwischen den beidseits angeordneten Gestängeanordnungen 18 erstrecken sich ein Frontspriegel 32, zwei Mittelspriegel 34 und 36 sowie ein so genannter Eckspriegel 38, der einen Übergang zwischen dem eigentlichen Dachabschnitt des Verdecks 10 und einem Heckscheibenabschnitt des Verdecks 10 in dessen Schließstellung definiert.

Zum Antrieb der Gestängeanordnung 18 ist an dem Hauptlager 24 ein als Elektromotor ausgebildeter Hauptantrieb 40 angeordnet, der über ein Antriebsritzel eine Antriebsscheibe 42 antreibt, die als Zahnradsegment ausgebildet ist und drehbar an dem Hauptlager 24 gelagert ist. An die Antriebsscheibe 42 ist an der Außenseite über einen Anlenkpunkt 43 ein Antriebslenker 44 angelenkt, der mit seinem der Antriebsscheibe 42 abgewandten Ende über einen Gelenkpunkt 46 an dem Hauptlenker 22 angelenkt ist.

An dem Hauptlager 24 ist des Weiteren über einen Gelenkpunkt 48 ein Heckscheibenlenker 50 angelenkt, an dem die Heckscheibe 16 gelagert ist. Um die Heckscheibe 16 beim Verstellen des Verdecks ebenfalls verstellen zu können, weist die Antriebsscheibe 42 einen Anlenkpunkt 52 für einen Antriebslenker 54 auf, der über einen Gelenkpunkt 56 an den Heckscheibenlenker 50 angebunden ist.

Der Ablageraumdeckel 14 ist über eine Viergelenkanordnung, die zwei Deckellenker 58 und 60 umfasst, über zwei Gelenke 62 und 64 an das Hauptlager 24 angelenkt. Mit ihren den Gelenken 62 und 64 abgewandten Enden sind die Deckellenker 58 und 60 über zwei Gelenkpunkte 66 und 68 an eine Basisplatte bzw. Basiskonstruktion 70 des Ablageraumdeckels 14 angelenkt. Zum Verschwenken des Ablageraumdeckels 14 gegenüber dem Hauptlager 24 weist die Antriebsscheibe 42 einen weiteren Anlenkpunkt 72 für einen Antriebslenker 74 auf, welcher in einem Gelenkpunkt 76 an den Deckellenker 58 angelenkt ist.

Durch die Anbindung der Antriebslenker 44, 54 und 74 an die Antriebsscheibe 42 ist es also möglich, durch den Hauptantrieb 40 sowohl die Gestängeanordnung 18 als auch die Heckscheibe 16 als auch den Ablageraumdeckel 14 gegenüber dem Hauptlager 24 zu verschwenken.

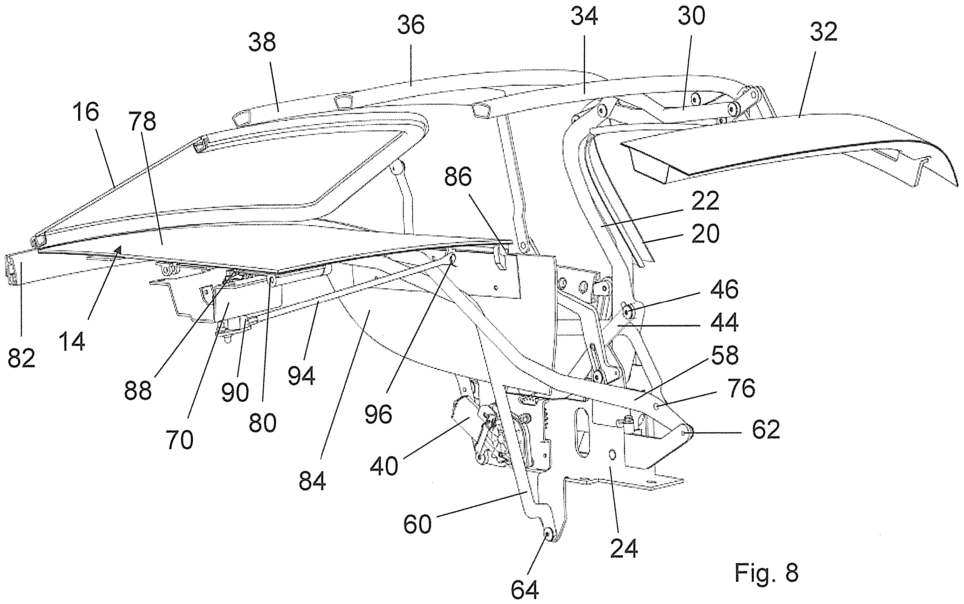

Wie bereits oben ausgeführt, umfasst der Ablageraumdeckel 14 eine Basisplatte 70, an der die Deckellenker 58 und 60 angelenkt sind. Des Weiteren umfasst der Ablageraumdeckel 14 eine Deckplatte 78, die die Sichtfläche des Ablageraumdeckels 14 bildet und über eine sich in Fahrzeug- bzw. Verdeckquerrichtung erstreckende Schwenkachse 80 zwischen einer in den Figuren 1, 3 und 8 dargestellten Absenkstellung und einer in den Figuren 2 und 7 dargestellten Hubstellung verstellbar ist. In der Absenkstellung ist zwischen dem heckseitigen Rand der Deckplatte 78 und einem hieran heckseitig angrenzenden Karosseriebauteil, wie einem Kofferraumdeckel, ein Spalt ausgebildet, so dass der Verdeckbezug durch den Spalt zu einem heckseitigen Spannbügel 82 durchtreten kann, der von der Unterseite an dem heckseitigen Bauteil anliegt und den Verdeckbezug in Verdecklängsrichtung in Spannung hält. In der Hubstellung der Deckplatte 78 des Ablageraumdeckels 14 ist dieser Spalt geschlossen, da sämtliche Verdeckgestängeelemente und der Verdeckbezug in dem Verdeckablageraum angeordnet sind. Der Spannbügel 82 ist in Führungsbahnen 83 der Hauptlager 24 schwenkbar gelagert.

An die Basisplatte 70 des Ablageraumdeckels 14 ist bezogen auf die vertikale Verdecklängsmittelebene beidseits jeweils eine Gestängeaustrittsklappe 84 über eine Schwenkachse 86 angelenkt, die sich in Fahrzeuglängsrichtung erstreckt. Die Gestängeaustrittsklappen 84 sind zwischen einer nach unten geklappten Durchlassstellung, in der die Gestängeanordnungen 18 aus dem Verdeckablageraum austreten, und einer nach oben geklappten Abdeckstellung (Figuren 2 und 7) verschwenkbar, in der der Ablageraum vollständig von dem Ablageraumdeckel 14 verschlossen ist. Die Gestängeaustrittsklappen 84 fluchten dann mit der ein Mittelteil des Ablageraumdeckels 14 darstellenden Deckplatte 78.

Um die Gestängeaustrittsklappen 84 und die Deckplatte 78 gemeinsam gegenüber der Basisplatte 70 verschwenken zu können, ist an der Basisplatte 70 ein Antriebsmotor 88 befestigt, dessen Antriebswelle mit einem Mehrfachkopplungselement 90 versehen ist, das drei Kugelköpfe 91, 92 und 93 aufweist, an denen jeweils eine Schubstange 94 bzw. 95 angelenkt ist, wobei in der Zeichnung nur die Schubstange für eine der Gestängeaustrittsklappen 84 dargestellt ist. Die Schubstangen 94 führen jeweils zu einem Gelenk 96 der jeweiligen Gestängeaustrittsklappe 84. Die Schubstange 95 führt zu einem Gelenk 97, das an einer aus zwei gelenkig miteinander verbundenen Hebeln einer Hebelanordnung 98 ausgebildet ist, die einerseits über ein Gelenk 99 an der Basisplatte 70 und andererseits über ein Gelenk 100 an der Deckplatte 78 angelenkt ist.

Eine Betätigung des Antriebsmotors 88 führt damit über das Mehrfachkopplungselement 90 und die Schubstangen 94 und 95 zu einem Verschwenken der beidseits angeordneten Gestängeaustrittsklappen 84 und der Deckplatte 78 gegenüber der Basisplatte 70.

### Bezugszeichenliste

- 10: Cabriolet-Verdeck
- 12: Verdeckgestänge
- 14: Ablageraumdeckel
- 16: Heckscheibe
- 18: Gestängeanordnung
- 20: Hauptsäule
- 22: Hauptlenker
- 24: Hauptlager
- 26: mittleres Dachrahmenelement
- 28: vorderes Dachrahmenelement
- 30: Koppellenkeranordnung
- 32: Frontspriegel
- 34: Mittelspriegel
- 36: Mittelspriegel
- 38: Eckspriegel
- 40: Hauptantrieb
- 42: Antriebsscheibe
- 43: Anlenkpunkt
- 44: Antriebslenker
- 46: Gelenkpunkt
- 48: Gelenkpunkt
- 50: Heckscheibenlenker
- 52: Anlenkpunkt
- 54: Antriebslenker
- 56: Gelenkpunkt
- 58: Deckellenker
- 60: Deckellenker
- 62: Gelenk
- 64: Gelenk
- 66: Gelenkpunkt
- 68: Gelenkpunkt
- 70: Basisplatte
- 72: Anlenkpunkt
- 74: Antriebslenker
- 76: Gelenkpunkt
- 78: Deckplatte
- 80: Schwenkachse
- 82: Spannbügel
- 83: Führungsbahn
- 84: Gestängeaustrittsklappe
- 86: Schwenkachse
- 88: Antriebsmotor
- 90: Mehrfachkopplungselement
- 91: Kugelkopf
- 92: Kugelkopf
- 93: Kugelkopf
- 94: Schubstange
- 95: Schubstange
- 96: Gelenk
- 97: Gelenk
- 98: Hebelanordnung
- 99: Gelenk
- 100: Gelenk

## Patentansprüche

1. Verdeck eines Cabriolet-Fahrzeugs, umfassend ein Verdeckgestänge (12), das zwischen einer einen Fahrzeuginnenraum überspannenden Schließstellung und einer Ablagestellung verstellbar ist, in der der Fahrzeuginnenraum nach oben freigegeben ist und das Verdeckgestänge in einem heckseitigen Verdeckablageraum abgelegt ist, der mittels eines Ablageraumdeckels (14) verschließbar ist, der bezogen auf eine vertikale Verdecklängsmittelebene beidseits jeweils über eine Lenkeranordnung an einem fahrzeugfesten, ein- oder mehrteiligen Hauptlager (24) schwenkbar gelagert ist, und das bezogen auf die vertikale Verdecklängsmittelebene beidseits jeweils eine Gestängeanordnung (18) aufweist, die an dem jeweiligen fahrzeugfesten Hauptlager (24) schwenkbar gelagert ist und mittels eines an dem Hauptlager (24) angeordneten Hauptantriebs (40) antreibbar ist, wobei die beidseits angeordneten Lenkeranordnungen des Ablageraumdeckels (14) jeweils von dem an dem betreffenden Hauptlager (24) angeordneten Hauptantrieb (40) angetrieben sind, der eine an dem Hauptlager (24) drehbar gelagerte Antriebsscheibe (42) antreibt, die über eine erste Antriebslenkeranordnung mit der Lenkeranordnung des Ablageraumdeckels (14) verbunden ist und über eine zweite Antriebslenkeranordnung mit der Gestängeanordnung (18) des Verdeckgestänges (12) verbunden ist, **dadurch gekennzeichnet, dass** die Antriebsscheibe (42) über eine dritte Antriebslenkeranordnung mit einem Heckscheibenlenker (50) zum Verstellen einer Heckscheibe (16) verbunden ist, der schwenkbar an dem Hauptlager (24) gelagert ist.

2. Verdeck nach Anspruch 1, **dadurch gekennzeichnet, dass** die Antriebsscheibe (42) ein Zahnrad oder ein Zahnradsegment ist, das von einem Antriebsritzel des Hauptantriebs (40) angetrieben ist.

3. Verdeck nach Anspruch 1 oder 2, **dadurch gekennzeichnet, dass** die Lenkeranordnung des Ablageraumdeckels (14) eine Viergelenkanordnung ist, die mit einer Basiskonstruktion (70) des Ablageraumdeckels (14) verbunden ist.

4. Verdeck nach Anspruch 3, **dadurch gekennzeichnet, dass** der Ablageraumdeckel (14) eine Deckplatte (78) aufweist, die schwenkbar an der Basiskonstruktion (70) gelagert ist.

5. Verdeck nach einem der Ansprüche 1 bis 4, **dadurch gekennzeichnet, dass** der Ablageraumdeckel (14) bezogen auf die vertikale Verdecklängsmittelebene beidseits jeweils mit einer Gestängeaustrittsklappe (84) versehen ist, die in der Schließstellung des Verdeckgestänges (12) nach unten in eine Durchlassstellung weggeklappt ist und in der Ablagestellung des Verdeckgestänges (12) in eine den Ablageraum überdeckende Abdeckstellung verschwenkbar ist.

6. Verdeck nach Anspruch 5, **dadurch gekennzeichnet, dass** an dem Ablageraumdeckel (14) ein Antriebsmotor (88) für die Gestängeaustrittsklappen (84) angeordnet ist.

7. Verdeck nach Anspruch 6, **dadurch gekennzeichnet, dass** der Antriebsmotor (88) jeweils über eine Schubstange (94) mit den Gestängeaustrittsklappen (84) gekoppelt ist.

8. Verdeck nach Anspruch 6 oder 7 in Verbindung mit Anspruch 4, **dadurch gekennzeichnet, dass** der Antriebsmotor (88) bei einer Betätigung über eine Hebelanordnung (98) die Deckplatte (78) des Ablageraumdeckels (14) gegenüber dessen Basiskonstruktion (70) um eine sich in Verdeckquerrichtung erstreckende Schwenkachse (80) verstellt.

9. Verdeck nach einem der Ansprüche 1 bis 8, **dadurch gekennzeichnet, dass** es ein Faltverdeck mit einem Verdeckbezug ist und das Verdeckgestänge (12) einen heckseitigen Spannbügel (82) umfasst, der schwenkbar an den beidseits angeordneten Hauptlagern (24) gelagert ist und/oder die beidseits angeordneten Gestängeanordnungen (18) miteinander verbindet.

## Claims

1. A top of a convertible vehicle, comprising a top linkage (12), which is adjustable between a closed position, in which a vehicle interior is covered, and a storage position, in which the vehicle interior is open to the top and the top linkage is stored in a rear-side top storage space, which can be closed by means of a storage space lid (14), which is pivotably mounted on a vehicle-fixed single-part or multipart main bearing (24) via a link mechanism on each of its two sides with respect to a vertical longitudinal center plane of the top, and which top linkage has a linkage mechanism (18) at each of its two sides with respect to the vertical longitudinal center plane of the top, each linkage mechanism being pivotably mounted on the respective vehicle-fixed main bearing (24) and being drivable by means of a main drive (40) arranged on the main bearing (24), wherein each of the link mechanisms of the storage space lid (14), which are arranged on both sides, is driven by the main drive (40) arranged on the respective main bearing (24), wherein the main drive drives a drive wheel (42), which is rotatably mounted on the main bearing (24) and connected to the link mechanism of the storage space lid (14) via a first drive link mechanism and connected to the linkage mechanism (18) of the top linkage (12) via a second drive link mechanism, **characterized in that** via a third drive link mechanism, the drive wheel (42) is connected to a rear-window link (50) for adjusting the rear window (16), said rear-window link being pivotably mounted on the main bearing (24).

2. The top according to claim 1, **characterized in that** the drive wheel (42) is a gear wheel or a gear wheel segment, which is driven by a drive pinion of the main drive (40).

3. The top according to claim 1 or 2, **characterized in that** the link mechanism of the storage space lid (14) is a four-bar mechanism, which is connected to a base structure (70) of the storage space lid (14).

4. The top according to claim 3, **characterized in that** the storage space lid (14) has a lid plate (78), which is pivotably mounted on the base structure (70).

5. The top according to any one of claims 1 to 4, **characterized in that** on each of its two sides with respect to the vertical longitudinal center plane of the top, the storage space lid (14) is provided with a linkage exit flap (84), which is swung downward into an open position when the top linkage (12) is in the closed position and which can be pivoted into a cover position, in which it covers the storage space, when the top linkage (12) is in the storage position.

6. The top according to claim 5, **characterized in that** a drive motor (88) for the linkage exit flaps (84) is arranged on the storage space lid (14).

7. The top according to claim 6, **characterized in that** the drive motor (88) is coupled to each of the linkage exit flaps (84) via a push rod (94).

8. The top according to claim 6 or 7 in combination with claim 4, **characterized in that** when the drive motor (88) is actuated, it adjusts the lid plate (78) of the storage space lid (14) in relation to the base structure (70) thereof about a pivot axis (80), which extends in the transverse direction of the top, via a lever mechanism (98).

9. The top according to any one of claims 1 to 8, **characterized in that** the top is a folding top, which has a top cover, and the top linkage (12) comprises a rear-side tensioning bow (82), which is pivotably mounted on the main bearings (24) arranged on both sides and/or interconnects the linkage mechanisms (18) arranged on both sides.

## Revendications

1. Capote de cabriolet d'un véhicule de cabriolet, comprenant une tringlerie de capote (12) qui peut être déplacée entre une position fermée dans laquelle un intérieur de véhicule est recouvert et une position de rangement dans laquelle l'intérieur de véhicule est révélé en haut et la tringlerie de capote (12) est rangée dans un compartiment de rangement de capote à l'arrière du véhicule qui peut être fermé au moyen d'un couvercle de compartiment de rangement (14) qui est monté d'une manière pivotante, par un ensemble de bras respectif de part et d'autre du plan central longitudinal de capote, à un palier principal (24) ayant une pièce ou plusieurs pièces et étant attaché au véhicule, la tringlerie de capote (12) ayant un agencement de tringlerie (18) de part et d'autre du plan central longitudinal vertical de capote, chaque agencement de tringlerie (18) étant monté de manière pivotante au palier principal (24) respectif attaché au véhicule et pouvant être entraîné par un dispositif d'entraînement principal (40) disposé sur le palier principale (24), les ensembles de bras du couvercle de compartiment de rangement (14) disposés des deux côtés sont entraînés chacun par le dispositif d'entraînement principal (40) qui est disposé sur le palier principal (24) respectif et entraîne une poulie d'entraînement (42) montée au palier principal (24) de manière rotative, la poulie d'entraînement (42) étant connectée à l'ensemble de bras du couvercle de compartiment de rangement (14) par un premier ensemble de bras d'entraînement et étant connectée à l'agencement de tringlerie (18) de la tringlerie de capote (12) par un deuxième ensemble de bras d'entraînement, **caractérisée en ce que** la poulie d'entraînement (42) est connectée à un bras de vitre arrière (50) par un troisième ensemble de bras d'entraînement qui sert à déplacer une vitre arrière (16) et est monté au palier principal (24) de manière pivotante.

2. Capote selon la revendication 1, **caractérisée en ce que** la poulie d'entraînement (42) est une roue dentée ou un segment de roue dentée étant entraîné par un pignon menant du dispositif d'entraînement principal (40).

3. Capote selon les revendications 1 ou 2, **caractérisée en ce que** l'ensemble de bras du couvercle de compartiment de rangement (14) est un agencement à quadrilatère articulé étant connecté avec une structure de base (70) du couvercle de compartiment de rangement (14).

4. Capote selon la revendication 3, **caractérisée en ce que** le couvercle de compartiment de rangement (14) a une plaque de recouvrement (78) étant montée à la structure de base (70) de manière pivotante.

5. Capote selon l'une quelconque des revendications 1 à 4, **caractérisée en ce que** le couvercle de compartiment de rangement (14) a un clapet de sortie de tringlerie (84) respectif de part et d'autre du plan central longitudinal vertical de la capote, les clapets de sortie de tringlerie (84) étant rabattus vers le bas dans une position de passage quand la tringlerie de capote (12) est dans la position fermée et pouvant être pivotés dans une position de couverture, dans laquelle le compartiment de rangement est couvert, quand la tringlerie de capote (12) est dans la position de rangement.

6. Capote selon la revendication 5, **caractérisée en ce qu'**un moteur d'entraînement (88) pour le clapet de sortie de tringlerie (84) est disposé sur le couvercle de compartiment de rangement (14).

7. Capote selon la revendication 6, **caractérisée en ce que** le moteur d'entraînement (88) est accouplé respectivement aux clapets de sortie de tringlerie (84) par une bielle (94).

8. Capote selon les revendications 6 ou 7 en combinaison avec la revendication 4, **caractérisée en ce que** lors d'une activation, le moteur d'entraînement (88) déplace la plaque de recouvrement (78) du couvercle de compartiment de rangement (14) par rapport à sa construction de base (70) autour d'un axe de pivotement (80) s'étendant dans le sens transversal de la capote à l'aide d'un système de leviers (98).

9. Capote selon l'une quelconque des revendications 1 à 8, **caractérisée en ce qu'**elle comprend une capote pliante ayant un revêtement de capote et la tringlerie de capote (12) comprend un étrier de tension (82) en arrière qui est monté de manière rotative aux paliers principaux (24) disposés des deux côtés et/ou qui relie les agencements de tringlerie (18) disposés des deux côtés.
